# EUROPEAN PATENT SPECIFICATION

(11) **EP 3 182 750 B1**
(45) Date of publication and mention of the grant of the patent: **04.09.2019**
(21) Application number: 14902817.7
(22) Date of filing: 25.09.2014
(51) Int. Cl.: H04W 24/08, H04W 88/08

(54) **RADIO SIGNAL MEASUREMENT METHOD AND DEVICE**
FUNKSIGNALMESSVERFAHREN UND -VORRICHTUNG
PROCÉDÉ ET DISPOSITIF DE MESURE DE SIGNAUX RADIO

(43) Date of publication of application: 21.06.2017
(73) Proprietor: Huawei Technologies Co., Ltd., Longgang District Shenzhen, Guangdong 518129 (CN)
(72) Inventor: GUAN, Lei, Shenzhen Guangdong 518129 (CN); MA, Sha, Shenzhen Guangdong 518129 (CN)
(74) Representative: Gill Jennings & Every LLP
(86) International application number: PCT/CN2014/087427
(87) International publication number: WO 2016/045051

(56) References cited:
- EP-A1- 2 472 940
- EP-A1- 2 663 140
- WO-A2-2013/036084
- CN-A- 102 823 167
- CN-A- 103 856 960
- CN-A- 103 974 316
- CN-A- 103 974 316
- GB-A- 2 498 988
- ZTE: "Discussion on open issues of small cell on/off and discovery", 3GPP DRAFT; R1-141405 DISCUSSION ON OPEN ISSUES OF SMALL CELL ONOFF AND DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG1, no. Shenzhen, China; 20140331 - 20140404 30 March 2014 (2014-03-30), XP050787075, Retrieved from the Internet: URL:http://www.3gpp.org/ftp/Meetings_3GPP_ SYNC/RAN1/Docs/ [retrieved on 2014-03-30]
- HUAWEI ET AL: "RRM measurement procedures with DRS", 3GPP DRAFT; R1-141917, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 18 May 2014 (2014-05-18), XP050789037, Retrieved from the Internet: URL:http://www.3gpp.org/ftp/Meetings_3GPP_ SYNC/RAN1/RAN1/Docs/ [retrieved on 2014-05-18]

## Description

### TECHNICAL FIELD

The present disclosure relates to the field of communications technologies, and in particular, to a radio signal measurement method.

### BACKGROUND

In a Long Term Evolution (LTE) system, to maintain service transmission, or perform cell selection, reselection, or handover, user equipment (UE) needs to perform synchronization and cell identification, channel state information (CSI) measurement, and radio resource management (RRM) measurement according to a reference signal sent by a Long Term Evolution base station (eNB). The radio resource management measurement includes measurement of reference signal received power (RSRP), reference signal received quality (RSRQ), a received signal strength indicator (RSSI), and the like, and is currently completed by using a cell-specific reference signal (CRS).

In the LTE system, all serving cells are located on licensed spectrums that can be used only for a network of an operator who purchases the licensed spectrums. Currently, an unlicensed spectrum draws more attention in the industry. In a most attractive method for using the unlicensed spectrum, carrier aggregation is performed in a secondary serving cell on the unlicensed spectrum and in a primary serving cell on the licensed spectrum, so as to serve the UE. The unlicensed secondary serving cell is referred to as an unlicensed Long Term Evolution (Unlicensed LTE, U-LTE) serving cell.

Generally, a serving cell in a network is always in an activated state, and this means that even if there is no data transmission, a primary synchronization signal (PSS), a secondary synchronization signal (SSS), and a CRS need to be sent continuously. In this way, the UE may perform RRM or CSI measurement at any time. However, an LTE-Advanced system has a relatively high requirement for power efficiency of the base station. To avoid severe interference between a large quantity of dense small cells, a small cell activation/deactivation mechanism is introduced, that is, a small cell serving no UE may be deactivated. In addition, to ensure that UE approaching a deactivated small cell at any time can find and measure the deactivated small cell as soon as possible, in the deactivated small cell, a discovery reference signal (DRS) needs to be sent at a relatively long interval, and other current information that has a relatively short transmission interval, such as a PSS, an SSS, or a CRS, is not sent. An interval of the DRS is longer than that of the current PSS, SSS, or CRS, for example, a transmission interval of dozens of or even hundreds of subframes. In an activated small cell, not only the DRS but also the current PSS, SSS, CRS, CSI-RS, control channel, and data channel, and the like need to be sent, so as to normally serve UE that has a service load in the small cell. The DRS is used for the UE to find the small cell and perform RRM measurement on the small cell. If the small cell has been assigned to the UE, the UE may further use the DRS to perform CSI measurement or even time-frequency synchronization or the like.

Because of an extremely complex network environment, a disadvantage of severe near-end interference exists.

EP 2663140 describes gain adjustment for each time segment in a signal. In particular, the disclosure relates to method and devices for use in a wireless device. A signal is received over a plurality of time segments, the signal over each time segment including a plurality of resource element blocks. For each time segment, at least one resource element block is selected from the plurality of resource element blocks of the time segment based on information determined about the time segment. For each time segment, a power value associated with the at least one resource element block of the time segment is determined. For each time segment, a gain adjustment value to adjust the gain of the time segment or one or more subsequent time segments of the signal is determined based upon the power value associated with the at least one resource element block..

CN 103974316 describes controlling the timing of measuring non-serving cells. In particular, the disclosure relates to a method for controlling user equipment (UE) for measuring. The method includes that the UE measures interference intensity on a resource unit (RE) corresponding to a specified first downlink signal and determines whether measuring of a non-serving cell is started or not on the basis of the interference intensity. The disclosure further discloses a device for controlling the UE for measuring. By adopting the method and the device, when the UE does not start a function of measuring a same-frequency/different-frequency non-serving cell in real time, a small cell in a macro cell can be timely found, load of the macro cell can be reduced, and serving quality of the UE can be improved.

GB 2498988 describes carrier aggregation using clear channel assessment. In particular, the disclosure relates to an apparatus, which is caused to select a transmission power configuration for a communication with at least one user terminal taking place on component carriers of a carrier aggregation configuration within a shared band, wherein the selection is between a low transmission power configuration applying a transmission power below a predetermined power threshold without a listen-before-talk (LBT) approach and a high transmission power configuration applying a transmission power of at least the predetermined power threshold; and upon detecting that the selected transmission power configuration needs to be informed, cause an indication of the selected transmission power configuration to the at least one user terminal and at least one secondary cell.

### SUMMARY

Aspects of the present invention provide a radio signal measurement method and base station to suppress near-end interference to a cell.

The invention is defined in the claims.

According to the radio signal measurement method and base station provided in the aspects of the present invention, because a signal is sent on each of a time domain resource occupied by a second resource, another base station or node detects the signal sent on a channel on which a first subframe is located, and because of the signal in a measured cell, the another base station or node does not send a signal on the channel on which the first subframe is located, thereby suppressing near-end interference to the measured cell.

### BRIEF DESCRIPTION OF DRAWINGS

To describe the technical solutions in the aspects of the present disclosure or in the prior art more clearly, the following briefly describes the accompanying drawings required for describing the aspects or the prior art. Apparently, the accompanying drawings in the following description show some aspects of the present disclosure, and persons of ordinary skill in the art may still derive other drawings from these accompanying drawings without creative efforts.
FIG. 1 shows a problem of interference existing in measuring a measured cell on an unlicensed spectrum;
FIG. 2 is a diagram of a radio signal measurement system according to an aspect of the present disclosure;
FIG. 3 is a flowchart of a radio signal measurement method according to an aspect of the present disclosure;
FIG. 4 is a structural diagram of a radio signal measurement apparatus according to an aspect of the present disclosure;
FIG. 5 is a flowchart of a radio signal measurement method according to an aspect of the present disclosure;
FIG. 6 shows a radio signal measurement apparatus according to an aspect of the present disclosure;
FIG. 7 is a time-frequency resource diagram of a first subframe used for RSRQ measurement according to an aspect of the present disclosure;
FIG. 8 is a time-frequency resource diagram of a first subframe used for RSRQ measurement according to an aspect of the present disclosure;
FIG. 9 is a time-frequency resource diagram of a first subframe used for RSRQ measurement according to an aspect of the present disclosure;
FIG. 10 is a time-frequency resource diagram of a first subframe used for RSRQ measurement according to an aspect of the present disclosure;
FIG. 11 is a time-frequency resource diagram of a first subframe used for CSI measurement according to an aspect of the present disclosure; and
FIG. 12 is a time-frequency resource diagram of a first subframe used for CSI measurement according to an aspect of the present disclosure.

### DESCRIPTION OF ASPECTS

To make the objectives, technical solutions, and advantages of the aspects of the present disclosure clearer, the following clearly and completely describes the technical solutions in the aspects of the present disclosure with reference to the accompanying drawings in the aspects of the present disclosure.

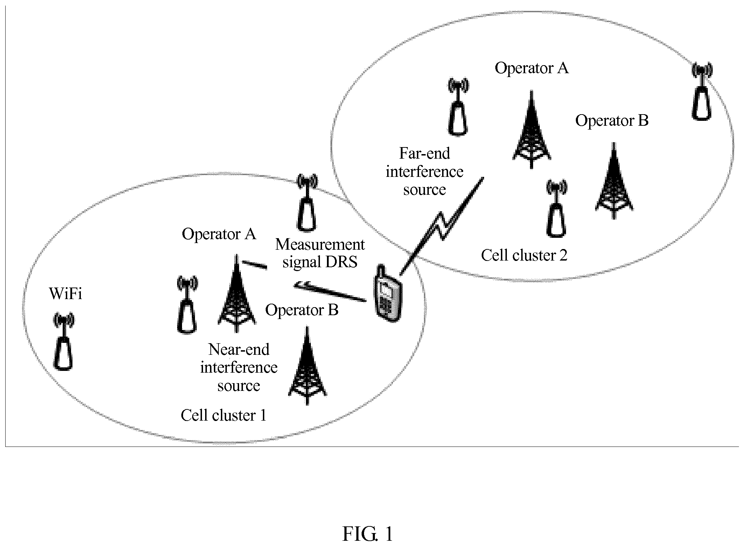

In a U-LTE system, problems are considered when multiple operators coexist. At a frequency of an unlicensed spectrum, networks of multiple operators may be deployed, or a hybrid of U-LTE and Wireless Fidelity (WiFi) may be deployed. Even non-operator WiFi, such as home WiFi, may be deployed. In addition, a lack of an effective coordination and optimization mechanism between operators or between an operator and a non-operator results in a relatively complex network topology. As shown in FIG. 1, there are two cell clusters 1 and 2, and in each cell cluster, U-LTE and WiFi are deployed by different operators. A distance between network nodes of different operators cannot be controlled because of a lack of a coordination mechanism. There are not only far-end interference sources between the cell clusters 1 and 2, but also near-end interference sources between different operators A and B. This poses more challenges to design of a U-LTE system on an unlicensed spectrum than that of an existing LTE system on a licensed spectrum.

In consideration of the hybrid deployment of network nodes of different operators on the unlicensed spectrum, and especially, existence of the near-end interference source caused by the lack of the coordination mechanism, a system on the unlicensed spectrum needs to run on a basis of a particular coexistence rule, for example, listen before talk (LBT) or restriction on a maximum transmit power. The LBT means that before sending a signal on a channel, each node, such as a base station, needs to detect whether the current channel is idle, that is, whether there is another potential near-end node sending a signal. This process is referred to as clear channel assessment (CCA). If it is detected that the channel is idle, the node may send the signal; or if it is detected that the channel is occupied, the node cannot send the signal currently, and may send the signal when it is detected that the channel is idle.

Because of introduction of the foregoing LBT rule, when a node provides a data service for UE in a serving cell, another near-end node cannot occupy the serving cell, so that the foregoing problem of near-end interference during data transmission is resolved. However, when a node has no data load, but needs to send a reference signal for neighboring UE to perform cell identification and measurement, the near-end interference problem still exists. Because of a constraint of the LBT rule, a reference signal of a U-LTE serving cell may use a DRS introduced by a current small cell activation/deactivation mechanism. Certainly, another reference signal, such as a CRS or a CSI-RS, is not excluded. The DRS is mainly described in the following. A time-frequency resource of the DRS in a subframe may be the same as that of a current CRS or CSI-RS, that is, the DRS may be considered as a long-interval CRS or CSI-RS. The CRS, the CSI-RS, or the long-interval DRS occupies only some OFDM symbols in one subframe, that is, once a U-LTE base station has no data load scheduling but needs to send the CRS, the CSI-RS, or the DRS (it is assumed that the U-LTE base station is in a deactivated state, or that the U-LTE is in an activated state but no data scheduling is performed in a particular subframe), U-LTE serving cells or WiFi nodes of other operators at near ends of the U-LTE serving cell may perform CCA, and further find an idle channel between OFDM symbols occupied by the DRSs in the foregoing DRS subframe. As a result, these near-end nodes send signals, and severe near-end interference occurs between U-LTE serving cells or WiFi nodes of different operators.

In addition, when UE measures a U-LTE serving cell, a signal sent by the near-end interference source is considered as interference and added into calculation of the RSSI or CSI, so that an RSRQ or CSI measurement result of the current serving cell is excessively conservative, that is, is underestimated. In other words, when data scheduling is normally performed in the U-LTE serving cell for the UE, because data occupies all OFDM symbols or SC-FDMA symbols of a scheduled subframe, the near-end node finds, by means of CCA, that the channel is occupied; and does not send a signal. However, when the U-LTE cell is being measured, because no data occupies the channel and considering that a current DRS does not occupy all OFDM symbols of one subframe, a signal sent by the near-end node is captured into the measurement quantity RSSI or CSI, and consequently, a channel state during measurement does not match a channel state during scheduling. The near-end interference problem is specifically shown in the cell cluster 1 in FIG. 1.

In addition, to reduce power consumption of the UE on RRM measurement by using the DRS, in implementation, DRS transmission in multiple cells in at least one neighboring area or in all cells generally needs to be in a same time window, for example, in a same subframe, in several same subframes, or in a measurement gap at a same moment. In this way, the UE can obtain RRM measurement results of multiple cells by performing RRM measurement by using the DRS in this time window only. With reference to the small cell activation/deactivation mechanism, in a cell in a deactivated state, a DRS needs to be sent, but a PSS, an SSS, a CRS, a broadcast channel, a data channel, or the like does not need to be sent, while in a cell in an activated state, not only the DRS needs to be sent, but also the PSS, the SSS, the CRS, the broadcast channel, and the data channel, and the like need to be sent. The deactivated state may also be referred to as a dormant state, and the activated state may also be referred to as an active state. No matter whether a measured cell on which the RRM measurement is performed by using the DRS is in the active state or dormant state, considering that the DRSs are synchronously sent in the foregoing multiple cells, a DRS transmission interval is relatively long, and in neighboring small cells, a relatively large quantity of cells may be in the dormant state, RSRQ or an SINR that is obtained by means of measurement by using the DRS and that is of the measured cell is underestimated, so that a cell that should serve the UE cannot serve the UE. The reason is as follows: A dormant cell does not cause interference to the measured cell in most time except the DRS subframe. However, because the DRSs are synchronously sent in cells, and a current RSSI or interference measurement is based on energy capture of an OFDM symbol in which a DRS is located or based on average power of all signals in all OFDM symbols in an entire subframe in which a CRS of the measured cell is located, energy of a DRS of a cell in the dormant state is added into calculation of an RSSI or interference, and ultimately obtained RSRQ or SINR is underestimated.

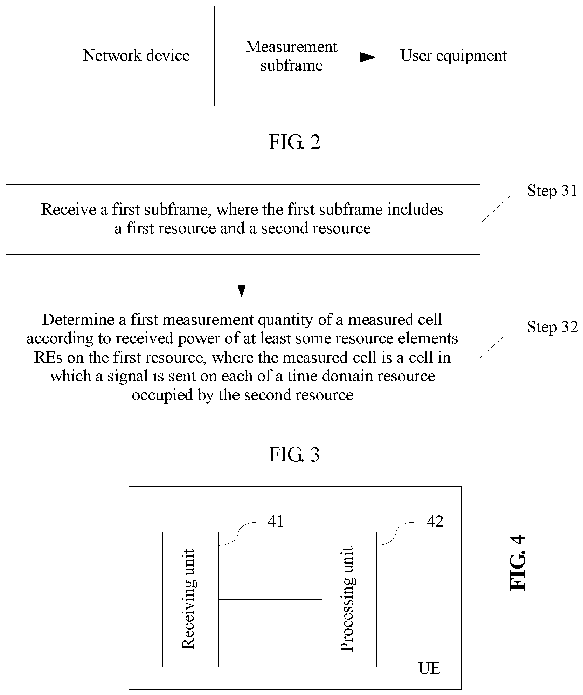

FIG. 2 is a diagram of a radio signal measurement system according to the present disclosure, and the system includes a network device and user equipment. The network device may send a measurement subframe to the user equipment. The network device may include a base station or another node. The base station may be an eNB in an LTE network, or certainly may be a base station in another network, or a device that has a same function as a base station. The another node may be an access point (AP), or the like. The measurement subframe may be set to one subframe or multiple subframes according to a requirement, and the measurement subframe may be used to send a signal, such as a DRS, a CRS, or a CSI-RS. The UE receives and measures the measurement subframe sent by the network device, so as to implement synchronization, cell identification, channel state information measurement and/or radio resource management measurement, and the like. The measurement performed by the user equipment on the measurement subframe may be measurement of a signal sent on a time-frequency resource of the measurement subframe. According to different measurement requirements, the time-frequency resource may be divided, for example, into a first resource, a second resource, a third resource, and the like. The user equipment measures different resources of the measurement subframe to obtain different parameters for measuring a radio signal.

FIG. 3 is a flowchart of a radio signal measurement method according to an aspect of the present disclosure, and specific steps are as follows:
Step 31: Receive a first subframe, where the first subframe includes a first resource and a second resource.

Optionally, a time domain resource occupied by the second resource includes a time domain resource occupied by the first resource. The time domain resource occupied by the second resource may be a time domain resource the same as the time domain resource occupied by the first resource; or the time domain resource occupied by the second resource may include the time domain resource occupied by the first resource, and the time domain resource occupied by the second resource is more than the time domain resource occupied by the first resource. That is, the time domain resource occupied by the second resource may be the same as the time domain resource occupied by the first resource, or may be more than the time domain resource occupied by the first resource and include the time domain resource occupied by the first resource.

Step 32: Determine a first measurement quantity of a measured cell according to received power of at least some resource elements REs on the first resource, where the measured cell is a cell in which a signal is sent on each of a time domain resource occupied by the second resource.

In this aspect, the measured cell may be an unlicensed secondary serving cell, and certainly, may be not limited to the unlicensed secondary serving cell.

In this aspect of the present disclosure, a signal is sent on each of a time domain resource occupied by a second resource, so that before sending a signal, if another near-end base station detects the signal on a channel on which the second resource is located, the another near-end base station does not send the signal. Therefore, a U-LTE cell or WiFi node, of another operator, neighboring to a measured cell does not send a signal when a signal is sent in the measured cell, so that a channel condition for measuring the measured cell by the UE matches a channel condition for scheduling the UE in the measured cell, and severe near-end interference to the measured cell is avoided. For example, severe near-end interference between U-LTE serving cells or WiFi nodes of different operators is avoided.

It should be noted that each of a time domain resource mentioned herein refers to each OFDM symbol or each SF-FDMA symbol, and another similar time domain granularity is not excluded, provided that another near-end node detects no idle channel on the second resource.

In an optional aspect, the first resource and the second resource occupy different frequency domain resources; or a frequency domain resource occupied by the first resource includes a frequency domain resource occupied by the second resource. Specifically, the frequency domain resource occupied by the first resource includes and is equal to the frequency domain resource occupied by the second resource; or the frequency domain resource occupied by the first resource includes and is more than the frequency domain resource occupied by the second resource. The first resource and the second resource occupy different frequency domain resources, that is, the first resource and the second resource are frequency division multiplexing. In this way, when the first measurement quantity of the measured cell is determined according to the received power of the at least some REs on the first resource, an RE on the frequency domain resource occupied by the second resource is not measured. Therefore, interference from the second resource is not introduced when the first measurement quantity is measured by using the at least some REs on the first resource, and measurement accuracy of the first measurement quantity is improved.

For example, when the first measurement quantity is an RSSI or an interference measurement result, the first resource and the second resource occupy different frequency domain resources, so that impact of the second resource is avoided in a process of obtaining the first measurement quantity by performing measurement on the at least some REs on the first resource. Alternatively, even if the frequency domain resource occupied by the first resource includes the frequency domain resource occupied by the second resource, a fill-in signal occupies only a relatively small proportion of the frequency domain resource of the first resource. For example, a proportion of a frequency domain resource of the fill-in signal in the frequency domain resource of the first resource needs to meet a regional rule. For example, the proportion of the frequency domain resource of the fill-in signal in the frequency domain resource of the first resource is 50% or 80%. If the first resource occupies 100 RBs in a frequency domain, the second resource of the fill-in signal may occupy 50 RBs in the 100 RBs. Another proportion is not limited in this aspect of the present disclosure. In this case, measurement is performed on the larger frequency domain resource of the first resource, and interference brought by the smaller frequency domain resource of the second resource affects little on a measurement result. Therefore, in the larger frequency domain resource, interference from the fill-in signal is smoothed and accuracy is improved. Therefore, the first measurement quantity obtained according to the received power of the at least some REs on the first resource may also improve measurement accuracy of a reference signal.

In an optional aspect, the signal on a part or all of the time domain resource of the second resource includes a fill-in signal.

Optionally, when there is data scheduling, the fill-in signal does not need to be sent. In this way, when receiving data, the UE does not need to consider existence of the fill-in signal when performing rate matching. However, the fill-in signal is sent when there is no data scheduling or when only the first reference signal is sent.

Optionally, when there is data scheduling, the fill-in signal may be sent. The fill-in signal may be sent when a quantity of resource blocks occupied by the data is not large enough, so that the fill-in signal and the scheduled data occupy different resource blocks. Specifically, rules in some regions specify that once a sending node sends a signal, at least 80% of current channel bandwidth needs to be occupied. In this case, if a resource block occupied by scheduled data in a subframe is less than 80% of the channel bandwidth, for example, small packet scheduling, a fill-in signal needs to be sent in this subframe, so that the fill-in signal and the foregoing data occupy different resource blocks, and a sum of resource blocks occupied by the fill-in signal and the data achieves at least 80% of the channel bandwidth. 80% is only a specific value, and another value is not excluded. 80% herein is only a specific example.

In an optional aspect, the determining a first measurement quantity of a measured cell according to received power of at least some REs on the first resource includes: determining the first measurement quantity of the measured cell according to received power of all REs on the first resource.

In an optional aspect, the frequency domain resource occupied by the first resource includes the frequency domain resource occupied by the second resource, and the at least some REs include an RE, on the first resource, other than an RE occupied by the fill-in signal on the second resource or other than an RE occupied by a time domain resource on which the fill-in signal on the second resource is located. The first measurement quantity is determined according to the received power of the at least some REs on the first resource, and the REs include the RE, on the first resource, other than the RE occupied by the fill-in signal on the second resource or other than the RE occupied by the time domain resource on which the fill-in signal on the second resource is located. Although the frequency domain resource occupied by the first resource includes the frequency domain resource occupied by the second resource, the RE occupied by the time domain resource on which the fill-in signal on the second resource is located is excluded from the REs used to determine the first measurement quantity, so that impact of the fill-in signal on the first measurement quantity is weakened, and accuracy of the first measurement quantity is improved.

In an optional aspect, a first reference signal is included on a part of the time domain resource of the first resource and a part of the time domain resource of the second resource.

In an optional aspect, a first reference signal is included on a part of the time domain resource of the first resource and a part of the time domain resource of the second resource; the first resource and the second resource occupy different frequency domain resources, and the at least some REs include an RE, on the first resource, other than an RE occupied by a time domain resource on which the first reference signal is located.

In an optional aspect, the signal on a part or all of the time domain resource of the second resource includes the fill-in signal, and after the receiving a first subframe, a second measurement quantity of the measured cell is determined according to received power of the first reference signal and/or the fill-in signal. Specifically, the UE may measure the second measurement quantity according to the first reference signal; or the UE may measure the second measurement quantity according to the fill-in signal; or the UE may measure the second measurement quantity according to the first reference signal and the fill-in signal. In this case, the fill-in signal may use sequence design of the first reference signal or another reference signal. Optionally, the UE may detect the fill-in signal by itself; or the UE may be notified of the existence of the fill-in signal by the base station, for example, a subframe in which the fill-in signal exists or a time-frequency resource of a subframe in which the fill-in signal exists.

In an optional aspect, after the second measurement quantity of the measured cell is determined according to the received power of the first reference signal and/or the fill-in signal, a third measurement quantity of the measured cell is determined according to the first measurement quantity and the second measurement quantity. The first measurement quantity is an RSSI, the second measurement quantity is RSRP, and the third measurement quantity is RSRQ; or the first measurement quantity is an interference measurement result, the second measurement quantity is a channel measurement result, and the third measurement quantity is a CSI measurement result.

In an optional aspect, the first resource and the second resource occupy different frequency domain resources, and the at least some REs include an RE in which a reference signal used for an interference measurement resource (IMR) is located.

In an optional aspect, the signal on a part or all of the time domain resource of the second resource includes the fill-in signal, and after the receiving a first subframe, a second measurement quantity of the measured cell is determined according to received power of the first reference signal and/or the fill-in signal, and a third measurement quantity of the measured cell is determined according to the first measurement quantity and the second measurement quantity. The first measurement quantity is an interference measurement result, the second measurement quantity is a channel measurement result, and the third measurement quantity is a channel state information CSI measurement result.

In an optional aspect, a second reference signal is received in a second subframe; a second measurement quantity is determined according to received power of the second reference signal received in the second subframe; a third measurement quantity of the measured cell is determined according to the first measurement quantity and the second measurement quantity.

In an optional aspect, a frequency domain resource of the fill-in signal and a frequency domain resource of the first reference signal are the same or have a spacing of at least one subcarrier.

In an optional aspect, bandwidth and/or transmit power of the fill-in signal are/is adjustable.

In an optional aspect, the bandwidth and/or the transmit power of the fill-in signal are/is adjusted according to a service load of the measured cell or a service load of a neighboring cell of the measured cell.

Specifically, adjusting the transmit power is used as an example for description. The sending node may set the transmit power of the fill-in signal according to transmit power setting of the data scheduling, so that a near-end node excluded or silenced by the data scheduling may be the same as or similar to a near-end node excluded or silenced by sending the fill-in signal, that is, an interference condition for performing measurement by the UE matches an interference condition for actually scheduling by the UE. Therefore, a modulation and coding scheme of the data scheduling is more accurately selected.

FIG. 4 is a structural diagram of a radio signal measurement apparatus according to an aspect of the present disclosure. The measurement apparatus may be UE, and the measurement apparatus includes a receiving unit 41 and a processing unit 42.

The receiving unit 41 is configured to receive a first subframe, where the first subframe includes a first resource and a second resource.

The receiving unit 41 may be configured to receive the first subframe sent by a network device (for example, an eNB or an unlicensed eNB).

The processing unit 42 is configured to determine a first measurement quantity of a measured cell according to received power of at least some resource elements REs on the first resource, where the measured cell is a cell in which a signal is sent on each of a time domain resource occupied by the second resource, and the time domain resource occupied by the second resource includes a time domain resource occupied by the first resource.

In this aspect, the measured cell may be an unlicensed secondary serving cell, and certainly, may be not limited to the unlicensed secondary serving cell.

The time domain resource occupied by the second resource includes the time domain resource occupied by the first resource. Specifically, the time domain resource occupied by the second resource may include and be equal to the time domain resource occupied by the first resource; or the time domain resource occupied by the second resource may include and be more than the time domain resource occupied by the first resource.

A signal is sent on each of a time domain resource occupied by a second resource, so that before sending a signal, if another near-end base station detects the signal on a channel on which the second resource is located, the another near-end base station does not send the signal. Therefore, a U-LTE cell or WiFi node, of another operator, neighboring to a measured cell does not send a signal when a signal is sent in the measured cell, so that a channel condition for measuring the measured cell by the UE matches a channel condition for scheduling the UE in the measured cell, and severe near-end interference to the measured cell is avoided. For example, severe near-end interference between U-LTE serving cells or WiFi nodes of different operators is avoided.

It should be noted that each of a time domain resource mentioned herein refers to each OFDM symbol or each SF-FDMA symbol, and another similar time domain granularity is not excluded, provided that another near-end node detects no idle channel on the second resource.

In an optional aspect, the first resource and the second resource occupy different frequency domain resources; or a frequency domain resource occupied by the first resource includes a frequency domain resource occupied by the second resource. Specifically, the frequency domain resource occupied by the first resource includes and is equal to the frequency domain resource occupied by the second resource; or the frequency domain resource occupied by the first resource includes and is more than the frequency domain resource occupied by the second resource. The first resource and the second resource occupy different frequency domain resources, that is, the first resource and the second resource are frequency division multiplexing. In this way, when the first measurement quantity of the measured cell is determined according to the received power of the at least some REs on the first resource, an RE on the frequency domain resource occupied by the second resource is not measured. Therefore, interference from the second resource is not introduced when the first measurement quantity is measured by using the at least some REs on the first resource, and measurement accuracy of the first measurement quantity is improved.

For example, when the first measurement quantity is an RSSI or an interference measurement result, the first resource and the second resource occupy different frequency domain resources, so that impact of the second resource is avoided in a process of obtaining the first measurement quantity by performing measurement on the at least some REs on the first resource. Alternatively, even if the frequency domain resource occupied by the first resource includes the frequency domain resource occupied by the second resource, a fill-in signal occupies only a relatively small proportion of the frequency domain resource of the first resource. For example, a proportion of a frequency domain resource of the fill-in signal in the frequency domain resource of the first resource needs to meet a regional rule. For example, the proportion of the frequency domain resource of the fill-in signal in the frequency domain resource of the first resource is 50% or 80%. If the first resource occupies 100 RBs in a frequency domain, the second resource of the fill-in signal may occupy 50 RBs in the 100 RBs. Another proportion is not limited in this aspect of the present disclosure. In this case, measurement is performed on the larger frequency domain resource of the first resource, and interference brought by the smaller frequency domain resource of the second resource affects little on a measurement result. Therefore, in the larger frequency domain resource, interference from the fill-in signal is smoothed and accuracy is improved. Therefore, the first measurement quantity obtained according to the received power of the at least some REs on the first resource may also improve measurement accuracy of a reference signal.

In an optional aspect, the signal on a part or all of the time domain resource of the second resource includes a fill-in signal.

Optionally, when there is data scheduling, the fill-in signal does not need to be sent. In this way, when receiving data, the UE does not need to consider existence of the fill-in signal when performing rate matching. However, the fill-in signal is sent when there is no data scheduling or when only the first reference signal is sent.

Alternatively, optionally, when there is data scheduling, the fill-in signal may be sent. The fill-in signal may be sent when a quantity of resource blocks occupied by the data is not large enough, so that the fill-in signal and the scheduled data occupy different resource blocks. Specifically, rules in some regions specify that once a sending node sends a signal, at least 80% of current channel bandwidth needs to be occupied. In this case, if a resource block occupied by scheduled data in a subframe is less than 80% of the channel bandwidth, for example, small packet scheduling, a fill-in signal needs to be sent in this subframe, so that the fill-in signal and the foregoing data occupy different resource blocks, and a sum of resource blocks occupied by the fill-in signal and the data achieves at least 80% of the channel bandwidth. 80% is only a specific value, and another value is not excluded. 80% herein is only a specific example.

In an optional aspect, that the processing unit 42 determines a first measurement quantity of a measured cell according to received power of at least some REs on the first resource includes: determining the first measurement quantity of the measured cell according to received power of all REs on the first resource.

In an optional aspect, the frequency domain resource occupied by the first resource includes the frequency domain resource occupied by the second resource, and the at least some REs include an RE, on the first resource, other than an RE occupied by the fill-in signal on the second resource or other than an RE occupied by a time domain resource on which the fill-in signal on the second resource is located. The first measurement quantity is determined according to the received power of the at least some REs on the first resource, and the REs include the RE, on the first resource, other than the RE occupied by the fill-in signal on the second resource or other than the RE occupied by the time domain resource on which the fill-in signal on the second resource is located. Although the frequency domain resource occupied by the first resource includes the frequency domain resource occupied by the second resource, the RE occupied by the time domain resource on which the fill-in signal on the second resource is located is excluded from the REs used to determine the first measurement quantity, so that impact of the fill-in signal on the first measurement quantity is weakened, and accuracy of the first measurement quantity is improved.

In an optional aspect, a first reference signal is included on a part of the time domain resource of the first resource and a part of the time domain resource of the second resource.

In an optional aspect, a first reference signal is included on a part of the time domain resource of the first resource and a part of the time domain resource of the second resource; the first resource and the second resource occupy different frequency domain resources, and the at least some REs include an RE, on the first resource, other than an RE occupied by a time domain resource on which the first reference signal is located.

In an optional aspect, the processing unit 42 is further configured to determine a second measurement quantity of the measured cell according to received power of the first reference signal and/or the fill-in signal. Specifically, the UE may measure the second measurement quantity according to the first reference signal; or the UE may measure the second measurement quantity according to the fill-in signal; or the UE may measure the second measurement quantity according to the first reference signal and the fill-in signal. In this case, the fill-in signal may use sequence design of the first reference signal or another reference signal. Optionally, the UE may detect the fill-in signal by itself; or the UE may be notified of the existence of the fill-in signal by the base station, for example, a subframe in which the fill-in signal exists or a time-frequency resource of a subframe in which the fill-in signal exists.

In an optional aspect, the processing unit 42 is further configured to determine a third measurement quantity of the measured cell according to the first measurement quantity and the second measurement quantity.

In an optional aspect, the first measurement quantity is a received signal strength indicator RSSI, the second measurement quantity is reference signal received power RSRP, and the third measurement quantity is reference signal received quality RSRQ; or the first measurement quantity is an interference measurement result, the second measurement quantity is a channel measurement result, and the third measurement quantity is a channel state information CSI measurement result.

In an optional aspect, the first resource and the second resource occupy different frequency domain resources, and the at least some REs include an RE in which a reference signal used for an IMR is located.

In an optional aspect, the processing unit is further configured to determine a second measurement quantity of the measured cell according to received power of the first reference signal and/or the fill-in signal, and determine a third measurement quantity of the measured cell according to the first measurement quantity and the second measurement quantity. The first measurement quantity is an interference measurement result, the second measurement quantity is a channel measurement result, and the third measurement quantity is a channel state information CSI measurement result.

In an optional aspect, the receiving unit 41 is further configured to receive a second reference signal in a second subframe; the processing unit is further configured to determine a second measurement quantity according to received power of the second reference signal received in the second subframe, and determine a third measurement quantity of the measured cell according to the first measurement quantity and the second measurement quantity.

In an optional aspect, a frequency domain resource of the fill-in signal and a frequency domain resource of the first reference signal are the same or have a spacing of at least one subcarrier.

In an optional aspect, bandwidth and/or transmit power of the fill-in signal are/is adjustable.

In an optional aspect, the bandwidth and/or the transmit power of the fill-in signal are/is adjusted according to a service load of the measured cell or a service load of a neighboring cell of the measured cell.

Specifically, adjusting the transmit power is used as an example for description. The sending node may set the transmit power of the fill-in signal according to transmit power setting of the data scheduling, so that a near-end node excluded or silenced by the data scheduling may be the same as or similar to a near-end node excluded or silenced by sending the fill-in signal, that is, an interference condition for performing measurement by the UE matches an interference condition for actually scheduling by the UE. Therefore, a modulation and coding scheme of the data scheduling is more accurately selected.

In an optional implementation manner, the processing unit 42 may be a processor. The processor may be specifically a baseband processor, a digital signal processor (DSP), a field programmable gate array (FPGA), or a central processing unit (CPU). The receiving unit 41 may be a receiver. The receiving unit 41 may also be implemented by using a transceiver. The receiver and the transceiver may be a radio frequency circuit or a combination of the processor and a radio frequency circuit.

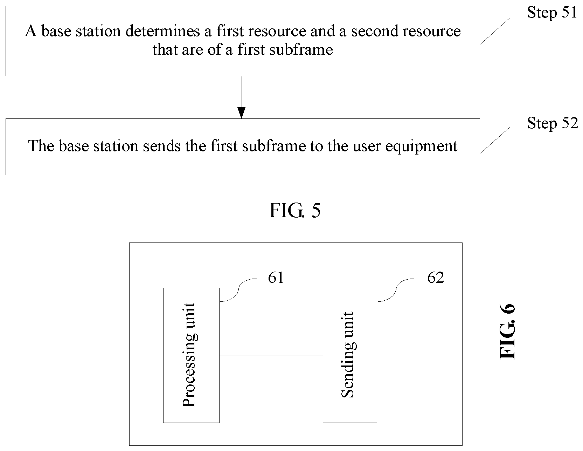

FIG. 5 is a flowchart of a radio signal measurement method according to an aspect of the present disclosure. Specific steps are as follows:
Step 51: A base station determines a first resource and a second resource of a first subframe.

A signal is sent on each of a time domain resource occupied by the second resource. The time domain resource occupied by the second resource includes a time domain resource occupied by the first resource, and received power of at least some REs on the first resource is used for user equipment to determine a first measurement quantity of a measured cell.

Step 52: The base station sends the first subframe to the user equipment.

The base station is a base station corresponding to the measured cell.

In this aspect, the measured cell may be an unlicensed secondary serving cell, and certainly, may be not limited to the unlicensed secondary serving cell.

In this aspect of the present disclosure, a signal is sent on each of a time domain resource occupied by a second resource, so that before sending a signal, if another near-end base station detects the signal on a channel on which the second resource is located, the another near-end base station does not send the signal. Therefore, a U-LTE cell or WiFi node, of another operator, neighboring to a measured cell does not send a signal when a signal is sent in the measured cell, so that a channel condition for measuring the measured cell by the UE matches a channel condition for scheduling the UE in the measured cell, and severe near-end interference to the measured cell is avoided. For example, severe near-end interference between U-LTE serving cells or WiFi nodes of different operators is avoided.

It should be noted that each of a time domain resource mentioned herein refers to each OFDM symbol or each SF-FDMA symbol, and another similar time domain granularity is not excluded, provided that another near-end node detects no idle channel on the second resource.

Optionally, the time domain resource occupied by the second resource includes the time domain resource occupied by the first resource. The time domain resource occupied by the second resource may include and be equal to the time domain resource occupied by the first resource; or the time domain resource occupied by the second resource may include and be more than the time domain resource occupied by the first resource.

In an optional aspect, the first resource and the second resource occupy different frequency domain resources; or a frequency domain resource occupied by the first resource includes a frequency domain resource occupied by the second resource. Specifically, the frequency domain resource occupied by the first resource includes and is equal to the frequency domain resource occupied by the second resource; or the frequency domain resource occupied by the first resource includes and is more than the frequency domain resource occupied by the second resource. The first resource and the second resource occupy different frequency domain resources, that is, the first resource and the second resource are frequency division multiplexing. In this way, when the first measurement quantity of the measured cell is determined according to the received power of the at least some REs on the first resource, an RE on the frequency domain resource occupied by the second resource is not measured. Therefore, interference from the second resource is not introduced when the first measurement quantity is measured by using the at least some REs on the first resource, and measurement accuracy of the first measurement quantity is improved.

For example, when the first measurement quantity is an RSSI or an interference measurement result, the first resource and the second resource occupy different frequency domain resources, so that impact of the second resource is avoided in a process of obtaining the first measurement quantity by performing measurement on the at least some REs on the first resource. Alternatively, even if the frequency domain resource occupied by the first resource includes the frequency domain resource occupied by the second resource, a fill-in signal occupies only a relatively small proportion of the frequency domain resource of the first resource. For example, a proportion of a frequency domain resource of the fill-in signal in the frequency domain resource of the first resource needs to meet a regional rule. For example, the proportion of the frequency domain resource of the fill-in signal in the frequency domain resource of the first resource is 50% or 80%. If the first resource occupies 100 RBs in a frequency domain, the second resource of the fill-in signal may occupy 50 RBs in the 100 RBs. Another proportion is not limited in this aspect of the present disclosure. In this case, measurement is performed on the larger frequency domain resource of the first resource, and interference brought by the smaller frequency domain resource of the second resource affects little on a measurement result. Therefore, in the larger frequency domain resource, interference from the fill-in signal is smoothed and accuracy is improved. Therefore, the first measurement quantity obtained according to the received power of the at least some REs on the first resource may also improve measurement accuracy of a reference signal.

In an optional aspect, the signal on a part or all of the time domain resource of the second resource includes a fill-in signal.

Optionally, when there is data scheduling, the fill-in signal does not need to be sent. In this way, when receiving data, the UE does not need to consider existence of the fill-in signal when performing rate matching. However, the fill-in signal is sent when there is no data scheduling or when only the first reference signal is sent.

Optionally, when there is data scheduling, the fill-in signal may be sent. The fill-in signal may be sent when a quantity of resource blocks occupied by the data is not large enough, so that the fill-in signal and the scheduled data occupy different resource blocks. Specifically, rules in some regions specify that once a sending node sends a signal, at least 80% of current channel bandwidth needs to be occupied. In this case, if a resource block occupied by scheduled data in a subframe is less than 80% of the channel bandwidth, for example, small packet scheduling, a fill-in signal needs to be sent in this subframe, so that the fill-in signal and the foregoing data occupy different resource blocks, and a sum of resource blocks occupied by the fill-in signal and the data achieves at least 80% of the channel bandwidth. 80% is only a specific value, and another value is not excluded. 80% herein is only a specific example.

In an optional aspect, the user equipment determines the first measurement quantity of the measured cell according to received power of all REs on the first resource.

In an optional aspect, the frequency domain resource occupied by the first resource includes the frequency domain resource occupied by the second resource, and the at least some REs include an RE, on the first resource, other than an RE occupied by the fill-in signal on the second resource or other than an RE occupied by a time domain resource on which the fill-in signal on the second resource is located. The first measurement quantity is determined according to the received power of the at least some REs on the first resource, and the REs include the RE, on the first resource, other than the RE occupied by the fill-in signal on the second resource or other than the RE occupied by the time domain resource on which the fill-in signal on the second resource is located. Although the frequency domain resource occupied by the first resource includes the frequency domain resource occupied by the second resource, the RE occupied by the time domain resource on which the fill-in signal on the second resource is located is excluded from the REs used to determine the first measurement quantity, so that impact of the fill-in signal on the first measurement quantity is weakened, and accuracy of the first measurement quantity is improved.

In an optional aspect, a first reference signal is included on a part of the time domain resource of the first resource and a part of the time domain resource of the second resource.

In an optional aspect, a first reference signal is included on a part of the time domain resource of the first resource and a part of the time domain resource of the second resource; the first resource and the second resource occupy different frequency domain resources, and the at least some REs include an RE, on the first resource, other than an RE occupied by a time domain resource on which the first reference signal is located.

In an optional aspect, the signal on a part or all of the time domain resource of the second resource includes the fill-in signal, and after the base station sends the first subframe to the user equipment, the user equipment determines a second measurement quantity of the measured cell according to received power of the first reference signal and/or the fill-in signal. Specifically, the UE may measure the second measurement quantity according to the first reference signal; or the UE may measure the second measurement quantity according to the fill-in signal; or the UE may measure the second measurement quantity according to the first reference signal and the fill-in signal. In this case, the fill-in signal may use sequence design of the first reference signal or another reference signal. Optionally, the UE may detect the fill-in signal by itself; or the UE may be notified of the existence of the fill-in signal by the base station, for example, a subframe in which the fill-in signal exists or a time-frequency resource of a subframe in which the fill-in signal exists.

In an optional aspect, after the second measurement quantity of the measured cell is determined, the user equipment determines a third measurement quantity of the measured cell is determined according to the first measurement quantity and the second measurement quantity.

In an optional aspect, the first measurement quantity is a received signal strength indicator RSSI, the second measurement quantity is reference signal received power RSRP, and the third measurement quantity is reference signal received quality RSRQ; or the first measurement quantity is an interference measurement result, the second measurement quantity is a channel measurement result, and the third measurement quantity is a channel state information CSI measurement result.

In an optional aspect, the first resource and the second resource occupy different frequency domain resources, and the at least some REs include an RE in which a reference signal used for an IMR is located.

In an optional aspect, the signal on a part or all of the time domain resource of the second resource includes the fill-in signal, and after the base station sends the first subframe to the user equipment, the user equipment determines a second measurement quantity of the measured cell according to received power of the first reference signal and/or the fill-in signal; and the user equipment determines a third measurement quantity of the measured cell according to the first measurement quantity and the second measurement quantity. The first measurement quantity is an interference measurement result, the second measurement quantity is a channel measurement result, and the third measurement quantity is a channel state information CSI measurement result.

In an optional aspect, the base station sends a second subframe to the user equipment, and the second subframe carries a second reference signal. The second reference signal is used for the user equipment to determine a second measurement quantity according to received power of the second reference signal, and determine a third measurement quantity of the measured cell according to the first measurement quantity and the second measurement quantity.

In an optional aspect, a frequency domain resource of the fill-in signal and a frequency domain resource of the first reference signal are the same or have a spacing of at least one subcarrier.

In an optional aspect, bandwidth and/or transmit power of the fill-in signal are/is adjustable.

In an optional aspect, the bandwidth and/or the power of the fill-in signal are/is adjusted according to a service load of the measured cell or a service load of a neighboring cell of the measured cell.

Specifically, adjusting the transmit power is used as an example for description. The sending node may set the transmit power of the fill-in signal according to transmit power setting of the data scheduling, so that a near-end node excluded or silenced by the data scheduling may be the same as or similar to a near-end node excluded or silenced by sending the fill-in signal, that is, an interference condition for performing measurement by the UE matches an interference condition for actually scheduling by the UE. Therefore, a modulation and coding scheme of the data scheduling is more accurately selected.

FIG. 6 is a radio signal measurement apparatus according to an aspect of the present disclosure, and the measurement apparatus includes a processing unit 61 and a sending unit 62.

The processing unit 61 is configured to determine a first resource and a second resource of a first subframe. A signal is sent on each of a time domain resource occupied by the second resource, the time domain resource occupied by the second resource includes a time domain resource occupied by the first resource, and received power of at least some REs on the first resource is used for user equipment to determine a first measurement quantity of a measured cell.

The sending unit 62 is configured to send the first subframe to the user equipment.

In this aspect, the measured cell may be an unlicensed secondary serving cell, and certainly, may be not limited to the unlicensed secondary serving cell.

A signal is sent on each of a time domain resource occupied by a second resource, so that before sending a signal, if another near-end base station detects the signal on a channel on which the second resource is located, the another near-end base station does not send the signal. Therefore, a U-LTE cell or WiFi node, of another operator, neighboring to a measured cell does not send a signal when a signal is sent in the measured cell, so that a channel condition for measuring the measured cell by the UE matches a channel condition for scheduling the UE in the measured cell, and severe near-end interference to the measured cell is avoided. For example, severe near-end interference between U-LTE serving cells or WiFi nodes of different operators is avoided.

It should be noted that each of a time domain resource mentioned herein refers to each OFDM symbol or each SF-FDMA symbol, and another similar time domain granularity is not excluded, provided that another near-end node detects no idle channel on the second resource.

In an optional aspect, the first resource and the second resource occupy different frequency domain resources; or a frequency domain resource occupied by the first resource includes a frequency domain resource occupied by the second resource. Specifically, the frequency domain resource occupied by the first resource includes and is equal to the frequency domain resource occupied by the second resource; or the frequency domain resource occupied by the first resource includes and is more than the frequency domain resource occupied by the second resource. The first resource and the second resource occupy different frequency domain resources, that is, the first resource and the second resource are frequency division multiplexing. In this way, when the first measurement quantity of the measured cell is determined according to the received power of the at least some REs on the first resource, an RE on the frequency domain resource occupied by the second resource is not measured. Therefore, interference from the second resource is not introduced when the first measurement quantity is measured by using the at least some REs on the first resource, and measurement accuracy of the first measurement quantity is improved.

For example, when the first measurement quantity is an RSSI or an interference measurement result, the first resource and the second resource occupy different frequency domain resources, so that impact of the second resource is avoided in a process of obtaining the first measurement quantity by performing measurement on the at least some REs on the first resource. Alternatively, even if the frequency domain resource occupied by the first resource includes the frequency domain resource occupied by the second resource, a fill-in signal occupies only a relatively small proportion of the frequency domain resource of the first resource. For example, a proportion of a frequency domain resource of the fill-in signal in the frequency domain resource of the first resource needs to meet a regional rule. For example, the proportion of the frequency domain resource of the fill-in signal in the frequency domain resource of the first resource is 50% or 80%. If the first resource occupies 100 RBs in a frequency domain, the second resource of the fill-in signal may occupy 50 RBs in the 100 RBs. Another proportion is not limited in this aspect of the present disclosure. In this case, measurement is performed on the larger frequency domain resource of the first resource, and interference brought by the smaller frequency domain resource of the second resource affects little on a measurement result. Therefore, in the larger frequency domain resource, interference from the fill-in signal is smoothed and accuracy is improved. Therefore, the first measurement quantity obtained according to the received power of the at least some REs on the first resource may also improve measurement accuracy of a reference signal.

In an optional aspect, the signal on a part or all of the time domain resource of the second resource includes a fill-in signal.

Optionally, when there is data scheduling, the fill-in signal does not need to be sent. In this way, when receiving data, the UE does not need to consider existence of the fill-in signal when performing rate matching. However, the fill-in signal is sent when there is no data scheduling or when only the first reference signal is sent.

Alternatively, optionally, when there is data scheduling, the fill-in signal may be sent. The fill-in signal may be sent when a quantity of resource blocks occupied by the data is not large enough, so that the fill-in signal and the scheduled data occupy different resource blocks. Specifically, rules in some regions specify that once a sending node sends a signal, at least 80% of current channel bandwidth needs to be occupied. In this case, if a resource block occupied by scheduled data in a subframe is less than 80% of the channel bandwidth, for example, small packet scheduling, a fill-in signal needs to be sent in this subframe, so that the fill-in signal and the foregoing data occupy different resource blocks, and a sum of resource blocks occupied by the fill-in signal and the data achieves at least 80% of the channel bandwidth. 80% is only a specific value, and another value is not excluded. 80% herein is only a specific example.

In an optional aspect, a measurement module is configured to determine the first measurement quantity of the measured cell according to received power of all REs on the first resource.

In an optional aspect, the frequency domain resource occupied by the first resource includes the frequency domain resource occupied by the second resource, and the at least some REs include an RE, on the first resource, other than an RE occupied by the fill-in signal on the second resource or other than an RE occupied by a time domain resource on which the fill-in signal on the second resource is located. The first measurement quantity is determined according to the received power of the at least some REs on the first resource, and the REs include the RE, on the first resource, other than the RE occupied by the fill-in signal on the second resource or other than the RE occupied by the time domain resource on which the fill-in signal on the second resource is located. Although the frequency domain resource occupied by the first resource includes the frequency domain resource occupied by the second resource, the RE occupied by the time domain resource on which the fill-in signal on the second resource is located is excluded from the REs used to determine the first measurement quantity, so that impact of the fill-in signal on the first measurement quantity is weakened, and accuracy of the first measurement quantity is improved.

In an optional aspect, a first reference signal is included on a part of the time domain resource of the first resource and a part of the time domain resource of the second resource.

In an optional aspect, a first reference signal is included on a part of the time domain resource of the first resource and a part of the time domain resource of the second resource; the first resource and the second resource occupy different frequency domain resources, and the at least some REs include an RE, on the first resource, other than an RE occupied by a time domain resource on which the first reference signal is located.

In an optional aspect, the signal on a part or all of the time domain resource of the second resource includes the fill-in signal, and the apparatus further includes: the measurement module, configured to determine a second measurement quantity of the measured cell according to received power of the first reference signal and/or the fill-in signal. Specifically, the UE may measure the second measurement quantity according to the first reference signal; or the UE may measure the second measurement quantity according to the fill-in signal; or the UE may measure the second measurement quantity according to the first reference signal and the fill-in signal. In this case, the fill-in signal may use sequence design of the first reference signal or another reference signal. Optionally, the UE may detect the fill-in signal by itself; or the UE may be notified of the existence of the fill-in signal by the base station, for example, a subframe in which the fill-in signal exists or a time-frequency resource of a subframe in which the fill-in signal exists.

In an optional aspect, the measurement module is further configured to determine a third measurement quantity of the measured cell according to the first measurement quantity and the second measurement quantity.

In an optional aspect, the first measurement quantity is a received signal strength indicator RSSI, the second measurement quantity is reference signal received power RSRP, and the third measurement quantity is reference signal received quality RSRQ; or the first measurement quantity is an interference measurement result, the second measurement quantity is a channel measurement result, and the third measurement quantity is a channel state information CSI measurement result.

In an optional aspect, the first resource and the second resource occupy different frequency domain resources, and the at least some REs include an RE in which a reference signal used for an IMR is located.

In an optional aspect, the signal on a part or all of the time domain resource of the second resource includes the fill-in signal, and the apparatus further includes: a measurement module, configured to determine a second measurement quantity of the measured cell according to received power of the first reference signal and/or the fill-in signal, and determine a third measurement quantity of the measured cell according to the first measurement quantity and the second measurement quantity. The first measurement quantity is an interference measurement result, the second measurement quantity is a channel measurement result, and the third measurement quantity is a channel state information CSI measurement result.

In an optional aspect, the sending unit 62 is further configured to send a second subframe to the user equipment. The second subframe carries a second reference signal, and the second reference signal is used for the user equipment to determine a second measurement quantity according to received power of the second reference signal, and determine a third measurement quantity of the measured cell according to the first measurement quantity and the second measurement quantity.

In an optional aspect, a frequency domain resource of the fill-in signal and a frequency domain resource of the first reference signal are the same or have a spacing of at least one subcarrier.

In an optional aspect, bandwidth and/or transmit power of the fill-in signal are/is adjustable.

In an optional aspect, the bandwidth and/or the power of the fill-in signal are/is adjusted according to a service load of the measured cell or a service load of a neighboring cell of the measured cell.

Specifically, adjusting the transmit power is used as an example for description. The sending node may set the transmit power of the fill-in signal according to transmit power setting of the data scheduling, so that a near-end node excluded or silenced by the data scheduling may be the same as or similar to a near-end node excluded or silenced by sending the fill-in signal, that is, an interference condition for performing measurement by the UE matches an interference condition for actually scheduling by the UE. Therefore, a modulation and coding scheme of the data scheduling is more accurately selected.

In an optional implementation manner, the processing unit 61 may be a processor. The processor may be specifically a baseband processor, a digital signal processor (DSP), a field programmable gate array (FPGA), or a central processing unit (CPU). The sending unit 62 may be a transmitter. The sending unit 62 may also be implemented by using a transceiver. The transmitter and the transceiver may be a radio frequency circuit or a combination of the processor and a radio frequency circuit.

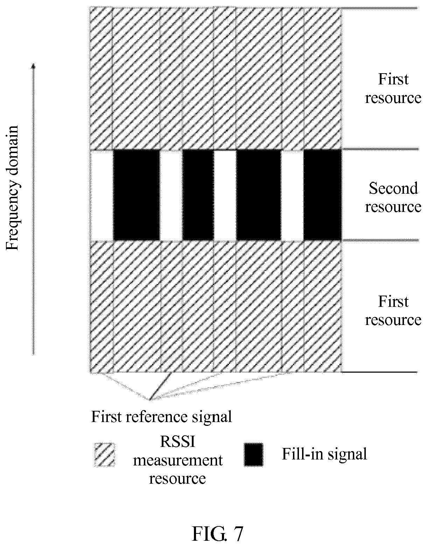

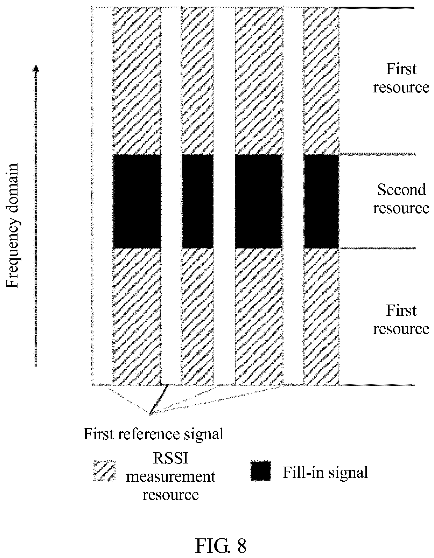

FIG. 7 or FIG. 8 is a time-frequency resource diagram of a first subframe according to an aspect of the present disclosure. As shown in FIG. 7 or FIG. 8, time-frequency resource division is performed on the first measurement subframe. The first subframe includes a first resource and a second resource, and the first resource and the second resource occupy different frequency domain resources, that is, the first resource and the second resource are frequency division multiplexing. UE may determine a first measurement quantity of a measured cell according to received power of at least some REs on the first resource. In an optional aspect, the first measurement quantity is an RSSI or an interference measurement result. The measured cell is a cell in which a signal is sent on each of a time domain resource occupied by the second resource. Near-end interference can be suppressed by setting a time-frequency resource of the second resource like this. Because of a constraint of an LBT rule, a near-end interference source detects the signal sent on each of the time domain resource of the second resource, and the near-end interference source does not send a signal. Therefore, the near-end interference is suppressed.

Before determining the first resource, the UE may further determine a location of the first resource in the first subframe.

Specifically, the UE may determine the location of the first resource in the first subframe in the following manner: The UE detects a measured cell, is synchronized with the measured cell, and determines the location of the first resource after synchronization.

The UE may determine the location of the first resource according to a preset rule. The rule may be notified in advance by a base station, or prestored in the UE. Alternatively, the UE may determine the location of the first resource according to location information notified of by a base station. After synchronized with the measured cell, the UE can obtain a cell identifier of the measured cell, and subsequently, the UE may report, to the base station, a measurement result of the cell identified by the cell identifier. Further, for example, the UE may detect a synchronization signal sent by the measured cell, and be synchronized with the measured cell.

In a time domain, the first resource and the second resource may be any one of an OFDM symbol, an SC-FDMA symbol, an OFDM symbol group, an SC-FDMA symbol group, a timeslot, or a subframe, that is, each of the time domain resource mentioned above is any one of an OFDM symbol, an SC-FDMA symbol, an OFDM symbol group, an SC-FDMA symbol group, a timeslot, or a subframe. In a frequency domain, the first resource and the second resource occupy any one of a subcarrier, a subcarrier group, a resource block RB, or a resource block group, that is, the frequency domain resource mentioned above is any one of a subcarrier, a subcarrier group, a resource block RB, or a resource block group. Specifically, for example, the first resource and the second resource occupy a subframe in the time domain, and an RB group in the frequency domain. A time domain resource in each of a time domain resource occupied by the first resource and the second resource is described by using a time domain resource unit in the following aspect. Specifically, the time domain resource unit may be the OFDM symbol, and is not limited in this aspect of thee present disclosure.

The measured cell is a cell in which a signal is sent on each time domain resource unit in the time domain resource occupied by the second resource. It is assumed that the time domain resource occupied by the second resource is one subframe, and the time domain resource unit in the time domain resource is an OFDM symbol in the foregoing one subframe. The signal on a part or all of the time domain resource of the second resource includes a fill-in signal, and the fill-in signal may occupy all or only a part of a frequency domain resource corresponding to an OFDM symbol in which the fill-in signal is located. For example, the fill-in signal may occupy only a part of a frequency domain resource corresponding to the part of OFDM symbol, that is, occupy some REs in the OFDM symbol; or may occupy all frequency domain resources, that is, all REs, that are corresponding to the part of OFDM symbol and that belong to the second resource. As shown in FIG. 7 and FIG. 8, in a time domain of the second resource, the fill-in signal is in some OFDM symbols. FIG. 7 and FIG. 8 show a case in which all frequency domain resources corresponding to some OFDM symbols occupied by the fill-in signal are occupied. Actually, the fill-in signal may occupy only some REs in some OFDM symbols, that is, the fill-in signal may occupy only some frequency domain resources of the foregoing OFDM symbol, instead of all frequency domain resources. In the first subframe, different from some OFDM symbols occupied by the foregoing fill-in signal, other OFDM symbols may carry a first reference signal. Similar to the fill-in signal, the first reference signal may occupy all or only a part of a frequency domain resource in an OFDM symbol in which the first reference signal is located, that is, occupy all or only some REs. In FIG. 7 and FIG. 8, the first reference signal may be a DRS and is used for the UE to identify a cell and perform operations, such as synchronization or measurement, on the cell. It is possible that the fill-in signal is sent on all OFDM symbols on the second resource. In this case, the fill-in signal and the first reference signal may occupy different REs in a same OFDM symbol, that is, the fill-in signal and the first reference signal occupy the same OFDM symbol in a frequency division manner.

In addition, the time domain resource occupied by the second resource includes the time domain resource occupied by the first resource, and a quantity of time domain resources occupied by the second resource is greater than or equal to a quantity of time domain resources occupied by the first resource. Specifically, as shown in FIG. 7 and FIG. 8, the time domain resource, that is, OFDM symbols, occupied by the second resource includes OFDM symbols occupied by the first resource, and a quantity of OFDM symbols occupied by the second resource is equal to a quantity of OFDM symbols occupied by the first resource. Alternatively, the time domain resource, that is, OFDM symbols, occupied by the second resource includes OFDM symbols occupied by the first resource, and a quantity of OFDM symbols occupied by the second resource is greater than a quantity of OFDM symbols occupied by the first resource. For example, the second resource occupies all of 14 OFDM symbols of the measurement subframe, and the first resource occupies only some OFDM symbols of the measurement subframe, for example, only some OFDM symbols occupied by the fill-in signal in the subframe.

The signal is sent in all OFDM symbols of the subframe in which the second resource is located, so as to resolve the near-end interference problem shown in FIG. 1. Because of a constraint of the LBT rule, before sending a signal on a channel, the base station needs to detect whether the channel is idle, and the base station does not send the signal if a signal is detected on the channel. Therefore, a U-LTE cell or WiFi node, of another operator, neighboring to a measured cell does not send a signal when a signal is sent in the measured cell, so that a channel condition for measuring the measured cell by the UE matches a channel condition for scheduling the UE in the measured cell, and severe near-end interference between U-LTE serving cells or WiFi nodes of different operators is avoided.

Optionally, the fill-in signal on the foregoing second resource may be sent when there is no data scheduling in a current first subframe, or may be sent together with data when there is data scheduling in a current first subframe. For example, the fill-in signal and a data channel occupy different frequency domain resources, that is, different resource blocks RBs. Therefore, when the data channel occupies a relatively small quantity of resource blocks, the fill-in signal needs to be sent to improve a probability of preventing a near-end node from sending a signal, or meet a particular resource block occupation requirement, for example, 80% of the channel bandwidth mentioned above. However, the fill-in signal and the data are not in a same RB in one subframe; otherwise, the base station needs to notify the UE of existence of the fill-in signal.

Existence of a fill-in signal on the second resource cannot represent an actual load status of a cell in which the fill-in signal is sent. Therefore, when the measured cell is measured, if energy of a fill-in signal of a cell (including the measured cell) is captured into an RSSI or interference measurement, RSRQ or channel quality is underestimated. Larger energy of the included fill-in signal results in severer underestimation, causes an error in cell maintenance, cell re-configuration, a cell handover, or the like, and further affects system serving quality. This is the reason why the second resource on which the fill-in signal is located and the first resource are frequency division multiplexing, that is, the fill-in signal is sent only on some frequency domain resources in the measurement subframe, and the first measurement quantity is measured on the first resource, that is, the energy of the fill-in signal is excluded from the first measurement quantity.

In the aspect in FIG. 7 and FIG. 8, UE determines a first measurement quantity of the measured cell according to received power of at least some REs on the first resource. The first resource and the second resource occupy different frequency domain resources. A first reference signal is included on a part of the time domain resource of the first resource and a part of the time domain resource of the second resource, that is, some OFDM symbols. The first reference signal may be a DRS, a CRS, or a CSI-RS. The signal on a part or all of the time domain resource of the second resource includes a fill-in signal. As shown in a shaded part in FIG. 7, the at least some REs may be all REs on the first resource. A measurement manner of such first measurement quantity is to perform smoothing processing on all resources of the first resource. The smoothing processing means that RSSI measurement is performed on all the resources of the first resource, and implementation is easier. Alternatively, as shown in a shaded part in FIG. 8, the at least some REs may be an RE, on the first resource, other than an RE occupied by a time domain resource on which the first reference signal is located. A measurement manner of such first measurement quantity is to perform measurement after excluding the RE that is on the first resource and that is occupied by the time domain resource on which the first reference signal is located. Therefore, this is more accurate. Still alternatively, the at least some REs may include an RE occupied by a time domain resource on which the first reference signal is located. Actually, in the foregoing three measurement manners of the first measurement quantity, a frequency division multiplexing mechanism of the first resource and the second resource is used, so that the frequency domain resource occupied by the second resource is not used in the RSSI measurement, and a problem of underestimating RSRQ and channel quality of a dormant-state cell is also resolved.

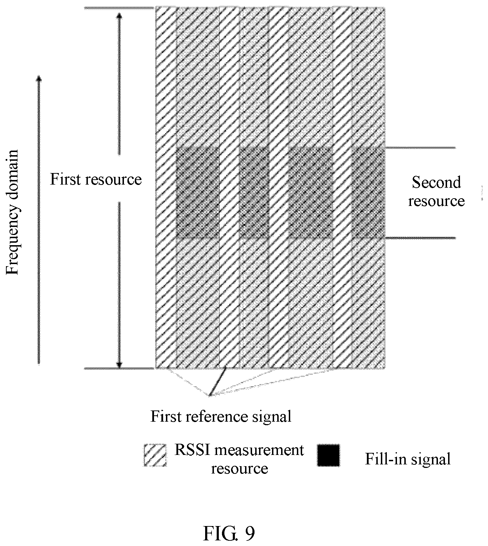

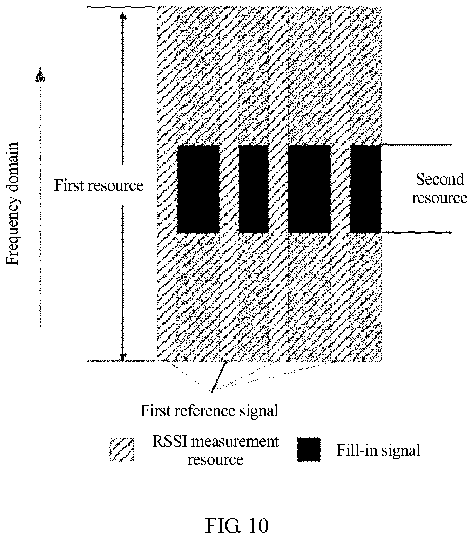

FIG. 9 or FIG. 10 is a time-frequency resource diagram of a first subframe according to another aspect of the present disclosure. In the aspect in FIG. 9 and FIG. 10, a first measurement subframe includes a first resource and a second resource. The second resource is consistent with that in the aspect in FIG. 7 and FIG. 8, and details are not described herein again. The aspect shown in FIG. 9 and FIG. 10 differs from the aspect shown in FIG. 7 and FIG. 8 in a time-frequency resource division manner of the first resource and the second resource. Specifically, in FIG. 9 and FIG. 10, a frequency domain resource occupied by the first resource includes a frequency domain resource occupied by the second resource, and a quantity of frequency domain resources occupied by the first resource is greater than a quantity of frequency domain resources occupied by the second resource. A first reference signal is included on a part of the time domain resource of the first resource and a part of the time domain resource of the second resource, and the first reference signal includes a DRS, a CRS, or a CSI-RS. The signal on a part or all of the time domain resource of the second resource includes a fill-in signal. As shown in a shaded part in FIG. 9, the at least some REs used to determine a first measurement quantity of a measured cell include all REs on the first resource. The fill-in signal occupies only a relatively small proportion of the frequency domain resource of the first resource. For example, a proportion of a frequency domain resource of the fill-in signal in the frequency domain resource of the first resource needs to meet a regional rule. For example, the proportion of the frequency domain resource of the fill-in signal in the frequency domain resource of the first resource is 50% or 80%. If the first resource occupies 100 RBs in a frequency domain, the second resource of the fill-in signal may occupy 50 RBs in the 100 RBs. Another proportion is not limited in this aspect of the present disclosure. Therefore, RSSI smoothing processing is performed in the entire frequency domain of the first resource, so that impact of the fill-in signal may be ignored, and the first measurement quantity is more accurate. In this aspect, the smoothing processing means performing RSSI measurement on REs in the entire frequency domain of the first resource. That is, for the second resource on which the fill-in signal is located, the fill-in signal is sent only on some frequency domain resources in the measurement subframe. The first measurement quantity is measured on the first resource. Therefore, in this case, even if the first resource includes the second resource, the fill-in signal on the second resource may be ignored when the RSSI measurement is performed in the entire frequency domain of the first resource. Alternatively, as shown in a shaded part in FIG. 9, a frequency domain resource occupied by the first resource includes a frequency domain resource occupied by the second resource, the at least some REs used to determine a first measurement quantity of a measured cell includes an RE, on the first resource, other than an RE occupied by a fill-in signal on the second resource or other than an RE occupied by a time domain resource on which a fill-in signal on the second resource is located Impact of the RE occupied by the fill-in signal or impact of the RE occupied by the time domain resource on which the fill-in signal on the second resource is located is excluded from the measurement of the first measurement quantity, so that the first measurement quantity is more accurate.

In the aspects of the present disclosure shown in FIG. 7 to FIG. 10, the UE may further determine a second measurement quantity of the measured cell according to received power of the first reference signal and/or the fill-in signal. Optionally, the first reference signal may be a DRS, a CRS, or a CSI-RS, and the second measurement quantity may be RSRP or a channel measurement result. The UE may further determine a third measurement quantity of the measured cell according to the first measurement quantity and the second measurement quantity. Optionally, the third measurement quantity is RSRQ or a CSI measurement result. For example, the UE determines RSRQ according to an RSSI and RSRP that are obtained by means of measurement, or the UE determines channel state information CSI measurement result according to an interference measurement result and a channel measurement result that are obtained by means of measurement. Specifically, after a DRS is detected, the UE may determine RSRP of the measured cell according to received power of the DRS. The UE may determine RSRQ of the measured cell according to the RSRP and the foregoing RSSI, and the RSRQ may be determined according to a ratio of the RSRP to the RSSI. Optionally, to ensure measurement accuracy, the first reference signal and/or fill-in signal for measurement of the second measurement quantity and the first resource for measurement of the first measurement quantity occupy a same frequency domain resource. Optionally, a measurement resource of the second measurement quantity is a first reference signal in the entire frequency domain of the first resource, and a measurement resource of the first measurement quantity is a frequency domain resource of the first resource other than the second resource. In this way, the foregoing problem of underestimating the RSRQ may be resolved, and an RSRP measurement sampling point may be increased to ensure more accurate RSRP measurement.

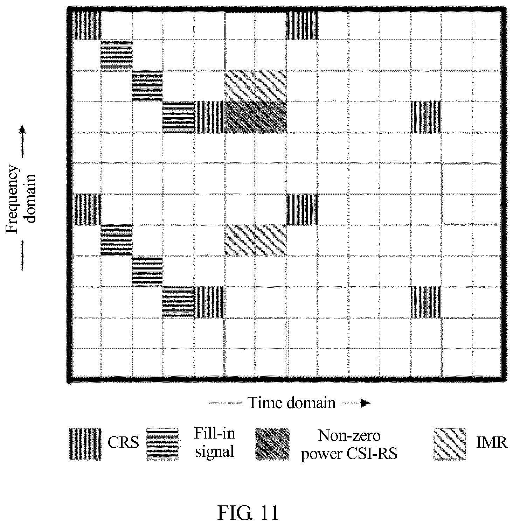

In the aspects shown in FIG. 7 to FIG. 10, the RSSI, the RSRP, and the RSRQ are respectively used as examples of the first measurement quantity, the second measurement quantity, and the third measurement quantity for description. As shown in FIG. 11, the following provides an aspect in which the first measurement quantity, the second measurement quantity, and the third measurement quantity are respectively an interference measurement part in CSI measurement, a channel measurement part in the CSI measurement, and a final CSI measurement result.

In a current LTE system, the CSI measurement may be implemented based on a CSI-RS. There are two types of CSI-RSs: a non-zero power CSI-RS and a zero power CSI-RS. The former means that a CSI-RS sequence is normally sent on a resource of the non-zero CSI-RS in a measured cell, and the latter means that the measured cell is silent on a resource of the zero power CSI-RS, that is, no signal is sent. The channel measurement part in the CSI measurement is performed based on the non-zero power CSI-RS, and the interference measurement part in the CSI measurement is performed based on an IMR. The IMR may be considered as one type of the foregoing zero power CSI-RS, that is, the measured cell is silent on the IMR, so that UE measures, on the IMR, interference from a neighboring cell of the measured cell. A resource that may be occupied by the CSI-RS in one subframe includes a part of the time domain resource (that is, OFDM symbols) of the subframe. Therefore, the foregoing near-end interference problem still exists. Specifically, because the measured cell is silent on the IMR, another potential near-end interfering node may send data, and the sent data is captured into an interference measurement result of the measured cell. When actual data scheduling is performed for the UE in the measured cell, the foregoing near-end interfering node cannot sent data because of data sending. Therefore, an interference condition for measurement is inconsistent with an interference condition for actual scheduling, that is, the interference measurement result is overestimated, that is, there is also a disadvantage of severe near-end interference in the CSI measurement.

FIG. 11 is a time-frequency resource diagram of a first subframe used for CSI measurement according to an aspect of the present disclosure. UE receives a first subframe, and the first subframe includes a first resource and a second resource. The second resource is REs in which a CRS, a fill-in signal, and a non-zero power CSI-RS is located, and the first resource is another RE in the first subframe other than the second resource.

Because of a constraint of an LBT rule, in this aspect, a signal is sent on each of a time domain resource occupied by the second resource, to avoid near-end interference. Specifically, as shown in FIG. 11, a time domain resource on which an IMR used for interference measurement is located is the sixth and the seventh OFDM symbols of a measurement subframe, and the IMR is four REs in the sixth and the seventh symbol. Therefore, a non-zero power signal needs to be sent in at least first seven OFDM symbols of the measurement subframe in a measured cell, so as to eliminate the foregoing near-end interference problem. The fill-in signal may occupy some symbols of the first seven symbols (because an existing CRS has existed in some symbols), or certainly may occupy each symbol of the first seven symbols, or even may occupy each symbol of the first subframe, or may occupy only the sixth and the seventh OFDM symbols of the measurement subframe. As shown in FIG. 11, a resource on which the non-zero power signal in the first seven symbols is located may be considered as the second resource, for example, the RE in which the CRS, the non-zero power CSI-RS, or the fill-in signal is located. Alternatively, a resource on which a non-zero power signal in the sixth and the seventh IMR-included OFDM symbols in the measurement subframe is located may be considered as the second resource.

A first measurement quantity of the measured cell is determined according to received power of at least some REs on the first resource. Optionally, the first measurement quantity is an interference measurement result. Specifically, as shown in FIG. 11, a zero power resource in the first seven symbols may be considered as the first resource, or a zero power resource in the sixth and the seventh symbols in the measurement subframe may be considered as the first resource, for example, an RE in which no signal is sent and an RE in which the IMR is located. It may be seen that the first resource and the second resource occupy different frequency domain resources, that is, different subcarriers. Certainly, another aspect is not excluded, for example, the first resource and the second resource occupy different resource blocks. The non-zero power signal is sent in each OFDM symbol on the second resource to prevent a near-end interference source from sending a signal, and interference from a neighboring cell to the measured cell is measured by using an IMR on the first resource. In an optional aspect, the at least some REs on the first resource include the foregoing IMR. The time domain resource occupied by the second resource includes a time domain resource occupied by the first resource, and a quantity of time domain resources occupied by the second resource is equal to a quantity of time domain resources occupied by the first resource. A case in which the quantity of time domain resources occupied by the second resource is greater than the quantity of time domain resources occupied by the first resource is not excluded.

In an optional aspect, a reference signal in a current system is sent in some OFDM symbols of the second resource, for example, a first reference signal, and may be specifically a CRS, a non-zero power CSI-RS, or the like. A non-zero power fill-in signal is sent in other OFDM symbols of the second resource. Certainly, it is possible that the fill-in signal is sent in all OFDM symbols of the second resource, that is, in this case, the fill-in signal and the first reference signal may be in different REs in a same OFDM symbol. Optionally, the fill-in signal may be an existing reference signal, such as a non-zero power CSI-RS or a CRS. Optionally, a frequency domain resource on which the fill-in signal is located and a frequency domain resource of the foregoing first reference signal may be the same or have a spacing of at least one frequency domain subcarrier. As shown in FIG. 11, frequency domain resources of the fill-in signal and the CRS have a spacing of at least one subcarrier.

In an optional aspect, the first reference signal and the fill-in signal on the foregoing second resource may be used to determine a second measurement quantity of the measured cell, for example, channel measurement in the CSI measurement. The CRS or the non-zero power CSI-RS on the second resource may be used for the channel measurement in the CSI measurement. As shown in FIG. 11, a fill-in signal that is located in a same symbol with the IMR may be configured as the non-zero power CSI-RS; or certainly, an existing non-zero power CSI-RS may be configured independently of the fill-in signal. Further, the UE may perform channel measurement in the CSI measurement according to the non-zero power CSI-RS or according to the fill-in signal configured as the non-zero power CSI-RS (that is, the fill-in signal may be filled with a sequence the same as the foregoing first reference signal); or certainly, may perform the channel measurement part in the CSI measurement according to both the non-zero power CSI-RS and the fill-in signal configured as the non-zero power CSI-RS. A frequency domain resource on which the interference measurement in the CSI measurement is located, that is, the first resource, and the frequency domain resource on which the fill-in signal is located are different, that is, are frequency-divided. The time domain resource on which the second resource is located, that is, the first seven OFDM symbols in which the non-zero power signal is sent, includes the time domain resource occupied by the interference measurement, that is, the sixth and the seventh OFDM symbols in this aspect.

In an optional aspect, no channel measurement may be performed in the first subframe, and interference measurement is performed by using the IMR. Correspondingly, channel measurement may be implemented by using a second reference signal in a second subframe received by the UE. The second subframe includes the second reference signal, and the second reference signal includes a discovery reference signal DRS, a cell-specific reference signal CRS, or a channel state information-reference signal CSI-RS. Then a CSI measurement result is obtained by using a channel measurement result and an interference measurement result that are obtained by means of measurement.

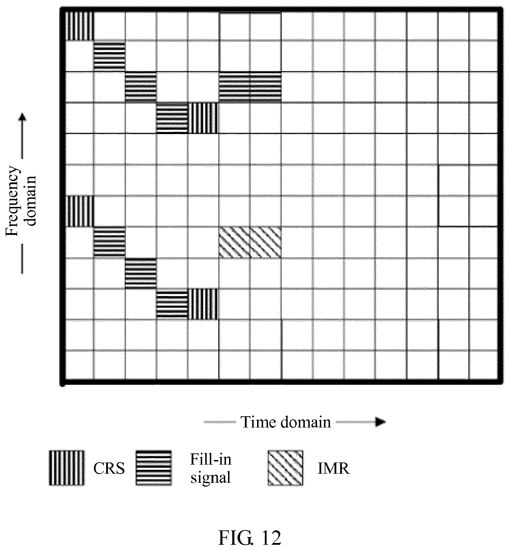

FIG. 12 is a time-frequency resource diagram of a first subframe used for CSI measurement according to another aspect of the present disclosure. Because one existing IMR resource occupies four REs, in this aspect, a part of the existing IMR resource is used for interference measurement, and another part of the IMR resource is used for sending a fill-in signal or a non-zero power CSI-RS. Therefore, the fill-in signal or the non-zero power CSI-RS may be used for channel measurement, and another part of the existing IMR is used for the interference measurement. In this way, the non-zero power CSI-RS or the fill-in signal may be not configured independently, and resource overheads are reduced. A fill-in signal in another symbol and an entire CSI measurement procedure are the same as those in the aspect shown in FIG. 11.

In the solutions of the aspects of the present disclosure shown in FIG. 7 to FIG. 12, the near-end interference problem is resolved, but a far-end interference problem may be ignored in RSSI measurement or interference measurement. As a result, an RSSI or interference measurement result that is obtained by means of measurement is less than an actual RSSI or interference, and a problem of overestimating RSRQ or a channel state information CSI measurement result is caused. The problem is described in detail in the following: As shown in FIG. 1, a measured cell is a base station of an operator A in a cell cluster 1. When UE measures the measured cell, the foregoing solution of a fill-in signal with continuous sending time is used, so that energy of a signal sent by a near-end interference source is not captured into an RSSI. For example, the near-end interference source is a base station of an operator B and two neighboring WiFi nodes in the cell cluster 1. In addition, when the measured cell is measured, if the base station of the operator A in a cell cluster 2 also sends a signal (no matter normal data scheduling or a fill-in signal), far-end interference sources, for example, the base station of the operator B and two neighboring WiFi nodes in the cell cluster 2 are simultaneously forbidden from sending a signal. However, when the measured cell normally serves the UE, the far-end interference sources are allowed to send a signal. If there is a specific distance from these far-end interference sources to the measured cell, and these far-end interference sources may still send the signal even if a signal is sent in the measured cell, an interference condition for measuring the measured cell does not match an interference condition for serving the UE by the measured cell. Because far-end interference may be ignored, radical cell handover/re-configuration, or a scheduling policy is caused.

To resolve the foregoing problem that interference from the far-end interference source is ignored in the first measurement quantity, in an optional aspect, a further solution of adjusting bandwidth and/or sending power of the fill-in signal may be used. Preferably, a base station may properly adjust transmission bandwidth of the foregoing fill-in signal according to a service load of the base station or by detecting a service load status of a neighboring base station or node. That is, the transmission bandwidth of the fill-in signal is corresponding to a load. For example, when there is a relatively great probability that a base station, such as a far-end interference source, detects an occupied channel, for example, continuously finds occupied channels after multiples times of CCA, the base station may determine that a neighboring base station has a relatively heavy load. In this case, relatively large bandwidth and/or sending power of the fill-in signal need/needs to be set. Otherwise, the base station determines the neighboring base station has a relatively small load, and correspondingly, relatively small bandwidth and/or sending power of the fill-in signal are/is set. A method for adjusting the bandwidth and/or sending power of the fill-in signal is not limited to the foregoing method, and may be any method for accessing a load status of a neighboring base station.

In addition, even if there is data scheduling, a fill-in signal of specific bandwidth may still be sent if a load of data scheduling is relatively small, for example, data is scheduled in a relatively small quantity of RBs. Optionally, the bandwidth and/or sending power of the fill-in signal may be notified to the UE by using signaling, or may be determined by the UE itself by using a method for detecting a blind sequence. The UE may even not know the bandwidth and/or sending power. For example, the UE does not need to know the bandwidth and/or sending power of the foregoing fill-in signal in the smoothing processing in the entire frequency domain of the foregoing first resource. If the UE detects a fill-in signal of the measured cell, the UE may further delete energy of the fill-in signal from the RSSI measurement, so that the RSSI measurement can reflect an actual load status more accurately. In this case, the fill-in signal needs to be a known sequence, similar to a reference signal. For example, a positioning reference signal (PRS) in an existing LTE system may be used. Further, a time-frequency pattern of the PRS may be extended to all OFDM symbols of one subframe.

When no conflict occurs, the aspects in the present disclosure and the features in the aspects may be mutually combined.

Finally, it should be noted that the foregoing aspects are merely intended for describing the technical solutions of the present disclosure but not for limiting the present disclosure. Although the present disclosure is described in detail with reference to the foregoing aspects, persons of ordinary skill in the art should understand that they may still make modifications to the technical solutions described in the foregoing aspects without departing from the scope of the appended claims.

## Claims

1. A radio signal measurement method, comprising:
determining (51), by a base station, a first resource and a second resource of a first subframe; and
sending (52), by the base station, the first subframe to a user equipment;
**characterized in that** the sending, by the base station, the first subframe to a user equipment comprises sending, by the base station, a signal on each of a time domain resource occupied by the second resource such that one or more cells neighboring the cell corresponding to the base station are prevented from transmitting a signal on the time domain resource, the cells using clear channel assessment, the time domain resource occupied by the second resource comprises a time domain resource occupied by the first resource, wherein the first resource is such that received power of at least some resource elements, REs, on the first resource is used for the user equipment to determine a first measurement quantity of a measured cell, wherein the measured cell is a cell of the base station.

2. The method according to claim 1, wherein the first resource and the second resource occupy different frequency domain resources; or a frequency domain resource occupied by the first resource comprises a frequency domain resource occupied by the second resource.

3. The method according to either of claims 1 and 2, wherein the signal on a part or all of the time domain resource of the second resource comprises a fill-in signal.

4. The method according to claim 3, wherein the frequency domain resource occupied by the first resource comprises the frequency domain resource occupied by the second resource, and the at least some REs comprise an RE, on the first resource, other than an RE occupied by the fill-in signal on the second resource or other than an RE occupied by a time domain resource on which the fill-in signal on the second resource is located.

5. Abase station, comprising:
a processing unit (61), configured to determine a first resource and a second resource of a first subframe, and
a sending unit (62) configured to send the first subframe to a user equipment;
**characterized in that** the sending unit is configured to send a signal on each of a time domain resource occupied by the second resource such that one or more cells neighboring the cell corresponding to the base station are prevented from transmitting a signal on the time domain resource, the cells using clear channel assessment, the time domain resource occupied by the second resource comprises a time domain resource occupied by the first resource, wherein the first resource is such that received power of at least some resource elements, REs, on the first resource is used for the user equipment to determine a first measurement quantity of a measured cell, wherein the measured cell is a cell of the base station.

6. The base station according to claim 5, wherein the first resource and the second resource occupy different frequency domain resources; or a frequency domain resource occupied by the first resource comprises a frequency domain resource occupied by the second resource.

7. The base station according to either of claims 5 and 6, wherein the signal on a part or all of the time domain resource of the second resource comprises a fill-in signal.

8. The base station according to claim 7, wherein the frequency domain resource occupied by the first resource comprises the frequency domain resource occupied by the second resource, and the at least some REs comprise an RE, on the first resource, other than an RE occupied by the fill-in signal on the second resource or other than an RE occupied by a time domain resource on which the fill-in signal on the second resource is located.

## Patentansprüche

1. Funksignalmessverfahren, umfassend:
Festlegen (51) einer ersten Ressource und einer zweiten Ressource eines ersten Unterrahmens durch eine Basisstation; und
Senden (52) des ersten Unterrahmens durch die Basisstation zu einem Benutzer-Equipment;
**dadurch gekennzeichnet, dass** das Senden des ersten Unterrahmens durch die Basisstation zu einem Benutzer-Equipment das Senden eines Signals auf jeder durch die zweite Ressource belegten Zeitdomänenressource umfasst, sodass eine oder mehrere Zellen, die an die der Basisstation entsprechende Zelle angrenzen, am Senden eines Signals auf der Zeitdomänenressource gehindert werden, wobei die Zellen die Bewertung klarer Kanäle verwenden; und die durch die zweite Ressource belegte Zeitdomänenressource eine durch die erste Ressource belegte Zeitdomänenressource umfasst, wobei die erste Ressource so ausgelegt ist, dass empfangene Leistung von mindestens einigen Ressourcenelementen, REs, an der ersten Ressource für das Benutzer-Equipment verwendet wird, um eine erste Messmenge einer gemessenen Zelle zu ermitteln, wobei die gemessene Zelle eine Zelle der Basisstation ist.

2. Verfahren nach Anspruch 1, wobei die erste Ressource und die zweite Ressource unterschiedliche Frequenzdomänenressourcen belegen oder eine durch die erste Ressource belegte Frequenzdomänenressource eine durch die zweite Ressource belegte Frequenzdomänenressource umfasst.

3. Verfahren nach einem der Ansprüche 1 und 2, wobei das Signal an einem Teil der oder der gesamten Zeitdomänenressource der zweiten Ressource ein Füllzeichensignal umfasst.

4. Verfahren nach Anspruch 3, wobei die durch die erste Ressource belegte Frequenzdomänenressource die durch die zweite Ressource belegte Frequenzdomänenressource umfasst und die mindestens einigen REs an der ersten Ressource ein anderes als ein durch das Füllzeichensignal an der zweiten Ressource belegtes RE oder ein anderes als ein durch eine Zeitdomänenressource, an der das Füllzeichensignal an der zweiten Ressource positioniert ist, belegtes RE umfassen.

5. Basisstation, umfassend:
eine Verarbeitungseinheit (61), ausgelegt zum Ermitteln einer ersten Ressource und einer zweiten Ressource eines ersten Unterrahmens, und
eine Sendeeinheit (62), ausgelegt zum Senden des ersten Unterrahmens zu einem Benutzer-Equipment;
**dadurch gekennzeichnet, dass** die Sendeeinheit ausgelegt ist zum Senden eines Signals an jeder einer durch die zweite Ressource belegten Zeitdomänenressource, sodass eine oder mehrere an die der Basisstation entsprechenden Zelle angrenzenden Zellen daran gehindert werden, ein Signal auf der Zeitdomänenressource zu senden, wobei die Zellen die Bewertung klarer Kanäle verwenden; und die durch die zweite Ressource belegte Zeitdomänenressource eine durch die erste Ressource belegte Zeitdomänenressource umfasst, wobei die erste Ressource so ausgelegt ist, dass empfangene Leistung von mindestens einigen Ressourcenelementen, REs, an der ersten Ressource für das Benutzer-Equipment verwendet wird, um eine erste Messmenge einer gemessenen Zelle zu ermitteln, wobei die gemessene Zelle eine Zelle der Basisstation ist.

6. Basisstation nach Anspruch 5, wobei die erste Ressource und die zweite Ressource unterschiedliche Frequenzdomänenressourcen belegen oder eine durch die erste Ressource belegte Frequenzdomänenressource eine durch die zweite Ressource belegte Frequenzdomänenressource umfasst.

7. Verfahren nach einem der Ansprüche 5 und 6, wobei das Signal an einem Teil der oder der gesamten Zeitdomänenressource der zweiten Ressource ein Füllzeichensignal umfasst.

8. Verfahren nach Anspruch 7, wobei die durch die erste Ressource belegte Frequenzdomänenressource die durch die zweite Ressource belegte Frequenzdomänenressource umfasst und die mindestens einigen REs an der ersten Ressource ein anderes als ein durch das Füllzeichensignal an der zweiten Ressource belegtes RE oder ein anderes als ein durch eine Zeitdomänenressource, an der das Füllzeichensignal an der zweiten Ressource positioniert ist, belegtes RE umfassen.

## Revendications

1. Procédé de mesure de signal radio, comprenant :
la détermination (51), par une station de base, d'une première ressource et d'une deuxième ressource d'une première sous-trame ; et
l'envoi (52), par la station de base, de la première sous-trame à un équipement utilisateur ;
**caractérisé en ce que** l'envoi, par la station de base, de la première sous-trame à un équipement utilisateur comprend l'envoi, par la station de base, d'un signal sur chacune d'une ressource du domaine temporel occupée par la deuxième ressource de telle sorte qu'une ou plusieurs cellules voisines de la cellule correspondant à la station de base soient empêchées de transmettre un signal sur la ressource du domaine temporel, les cellules utilisant une évaluation de canal dégagé, la ressource du domaine temporel occupée par la deuxième ressource comprenant une ressource du domaine temporel occupée par la première ressource, la première ressource étant telle qu'une puissance reçue d'au moins certains éléments de ressource, RE, sur la première ressource soit utilisée pour que l'équipement utilisateur détermine une première quantité de mesure d'une cellule mesurée, la cellule mesurée étant une cellule de la station de base.

2. Procédé selon la revendication 1, dans lequel la première ressource et la deuxième ressource occupent des ressources du domaine fréquentiel différentes ; ou une ressource du domaine fréquentiel occupée par la première ressource comprend une ressource du domaine fréquentiel occupée par la deuxième ressource.

3. Procédé selon l'une ou l'autre des revendications 1 et 2, dans lequel le signal sur une partie ou la totalité de la ressource du domaine temporel de la deuxième ressource comprend un signal de remplissage.

4. Procédé selon la revendication 3, dans lequel la ressource du domaine fréquentiel occupée par la première ressource comprend la ressource du domaine fréquentiel occupée par la deuxième ressource, et les au moins certains RE comprennent un RE, sur la première ressource, autre qu'un RE occupé par le signal de remplissage sur la deuxième ressource ou autre qu'un RE occupé par une ressource du domaine temporel sur laquelle se trouve le signal de remplissage sur la deuxième ressource.

5. Station de base, comprenant :
une unité de traitement (61), configurée pour déterminer une première ressource et une deuxième ressource sur une première sous-trame, et
une unité d'envoi (62), configurée pour envoyer la première sous-trame à un équipement utilisateur ;
**caractérisée en ce que** l'unité d'envoi est configurée pour envoyer un signal sur chacune d'une ressource du domaine temporel occupée par la deuxième ressource de telle sorte qu'une ou plusieurs cellules voisines de la cellule correspondant à la station de base soient empêchées de transmettre un signal sur la ressource du domaine temporel, les cellules utilisant une évaluation de canal dégagé, la ressource du domaine temporel occupée par la deuxième ressource comprenant une ressource du domaine temporel occupée par la première ressource, la première ressource étant telle qu'une puissance reçue d'au moins certains éléments de ressource, RE, sur la première ressource soit utilisée pour que l'équipement utilisateur détermine une première quantité de mesure d'une cellule mesurée, la cellule mesurée étant une cellule de la station de base.

6. Station de base selon la revendication 5, dans laquelle la première ressource et la deuxième ressource occupent des ressources du domaine fréquentiel différentes ; ou une ressource du domaine fréquentiel occupée par la première ressource comprend une ressource du domaine fréquentiel occupée par la deuxième ressource.

7. Station de base selon l'une ou l'autre des revendications 5 et 6, dans laquelle le signal sur une partie ou la totalité de la ressource du domaine temporel de la deuxième ressource comprend un signal de remplissage.

8. Station de base selon la revendication 7, dans laquelle la ressource du domaine fréquentiel occupée par la première ressource comprend la ressource du domaine fréquentiel occupée par la deuxième ressource, et les au moins certains RE comprennent un RE, sur la première ressource, autre qu'un RE occupé par le signal de remplissage sur la deuxième ressource ou autre qu'un RE occupé par une ressource du domaine temporel sur laquelle se trouve le signal de remplissage sur la deuxième ressource.
